# EUROPEAN PATENT APPLICATION

(11) **EP 4 497 552 A1**
(43) Date of publication of application: **29.01.2025**
(21) Application number: 24190994.4
(22) Date of filing: 25.07.2024
(51) Int. Cl.: B25J 9/16, B25J 13/08

(54) **ROBOTIC SYSTEM AND METHOD OF CONTROLLING THEREOF**

(30) Priority: 25.07.2023 US 202318225889
(71) Applicant: Hand Held Products, Inc., Charlotte, NC 28202 (US)
(72) Inventor: LEWIS, Patrick William, Charlotte, 28202 (US); PAUL, Arnab, Charlotte, 28202 (US)
(74) Representative: Haseltine Lake Kempner LLP

(57) **Abstract**

A robotic system includes a robotic arm having an end effector to move a plurality of articles from a first location to a second location, a first sensor attached to the end effector, and a processor communicably coupled to the first sensor. The processor is provided to actuate the end effector to lift an article from the first location, receive a first input from the first sensor in response to the end effector lifting the article from the first location, calculate a mass of the article based at least on the first input, and control a speed and acceleration of movement of the robotic arm towards the second location, based on the calculated mass of the article. Methods of controlling the robotic system are also disclosed.

## Description

### TECHNOLOGICAL FIELD

The present disclosure generally relates to a robotic system, and more particularly relates to controlling movement of a robotic arm of the robotic system.

### BACKGROUND

A robot is generally defined as a reprogrammable and multifunctional manipulator designed to move material, parts, tools, or specialized devices through variable programmed motions for a performance of tasks. Robots may be manipulators that are physically anchored (for example, industrial robotic arms), mobile robots that move throughout an environment (for example, using legs, wheels, or traction-based mechanisms), or some combination of a manipulator and a mobile robot. Robots are utilized in a variety of industries including, for example, manufacturing, warehouse logistics, transportation, hazardous environments, exploration, and healthcare.

Robots are also used for palletization and depalletization, where products are moved from one location to other. During such transportation of the product, product mass-based speed control of robotic arm is necessary in product handling pick and place operation. Often, robots are employed to handle heavy products. Owing to high inertia of such heavy objects during movement, there may be a high probability of dropping the product due to robot momentum while picking and/or placing. As such, the speed and acceleration of the robot may need to be adjusted at different segments of trajectory of the robotic arm based on the mass of the product.

### BRIEF SUMMARY

According to an exemplary embodiment of the present disclosure, a robotic system is disclosed. The robotic system includes a robotic arm having an end effector to move a plurality of articles from a first location to a second location, a first sensor attached to the end effector, and a processor communicably coupled to the first sensor. The processor is provided to actuate the end effector to lift an article from the first location, receive a first input from the first sensor in response to the end effector lifting the article from the first location, calculate a mass of the article based at least on the first input, and control a speed and acceleration of movement of the robotic arm towards the second location, based on the calculated mass of the article.

In an embodiment, the first sensor is a force sensor, and the first input corresponds to a value of force required to lift the article from the first location.

In an embodiment, the first sensor is attached to an engagement surface of the end effector, where the engagement surface abuts at least one surface of the article. In a preferred embodiment, the first sensor is attached to the center of the engagement surface.

In an embodiment, the processor is operably coupled to the robotic arm and aligns the end effector of the robotic arm with respect to the article.

In an embodiment, the robotic system further includes a second sensor attached to the end effector to generate a second input in response to movement of the end effector engaged with the article. The second input corresponds to a value of acceleration of the end effector engaged with the article and moving from the first location.

In an embodiment, the processor is communicably attached to the second sensor to calculate the mass of the article based at least on the first input and the second input.

According to another exemplary embodiment of the present disclosure, a method of controlling a robotic system includes actuating, by a processor, an end effector of a robotic arm of the robotic system to lift an article from a first location. The end effector is provided to move a plurality of articles from the first location to a second location. The method further includes receiving, by the processor, a first input from a first sensor in response to the end effector lifting the article from the first location, where the first sensor is attached to the end effector. The method further includes calculating, by the processor, a mass of the article based at least on the first input. Further, based on the calculated mass of the article, the method also includes controlling, by the processor, a speed and acceleration of movement of the robotic arm towards the second location.

In an embodiment, the method further includes aligning, by the processor, the end effector of the robotic arm with respect to the article.

In an embodiment, the method further includes receiving, by the processor, a second input from a second sensor in response to movement of the end effector engaged with the article. The second input corresponds to a value of acceleration of the end effector engaged with the article and moving from the first location. In some embodiments, the second input corresponds to a pose of the end effector, and velocity and acceleration of the end effector may be derived from the second input.

In an embodiment, the method further includes calculating the mass of the article based at least on the first input and the second input. In some embodiments, the method includes calculating the mass of the article based at least on the first input and optionally using the second input.

According to yet another exemplary embodiment of the present disclosure, a method of controlling a robotic system includes actuating, by a processor, an end effector of a robotic arm of the robotic system to lift an article from among a plurality of articles from a first location. The end effector is provided to move the article from the first location to a second location. The method further includes receiving, by the processor, during a first time interval, a first set of inputs from a first sensor in response to the end effector lifting the article from the first location. The first sensor is attached to the end effector.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates an environment implementing a robotic system performing palletization and/or depalletization, according to an aspect of the present disclosure;
FIG. 2 illustrates a side view of the robotic system, according to an embodiment of the present disclosure;
FIG. 3 is an enlarged view of a portion of an end effector of the robotic system, according to an embodiment of the present disclosure;
FIG. 4 is a block diagram of the robotic system, according to one embodiment of the present disclosure;
FIG. 5 is a block diagram of the robotic system, according to another embodiment of the present disclosure;
FIG. 6 is a flowchart of a method of controlling the robotic system, according to one aspect of the present disclosure; and
FIG. 7 is a flowchart of a method of controlling the robotic system, according to another aspect of the present disclosure.

Further areas of applicability of the present disclosure will become apparent from the detailed description provided hereinafter. It should be understood that the detailed description of exemplary embodiments is intended for illustration purposes only and is, therefore, not intended to necessarily limit the scope of the disclosure.

### DETAILED DESCRIPTION

Embodiments of the present disclosure are described more fully hereinafter with reference to the accompanying drawings, in which some, but not all, embodiments are shown. Indeed, various embodiments may be embodied in many different forms and should not be construed as limited to the embodiments set forth herein. Other embodiments, and modifications and improvements of the described embodiments, will occur to those skilled in the art and all such other embodiments, modifications and improvements are within the scope of the present invention. Features from one embodiment or aspect may be combined with features from any other embodiment or aspect in any appropriate combination. For example, any individual or collective features of method aspects or embodiments may be applied to apparatus, product or component aspects or embodiments and vice versa. Like numbers refer to like elements throughout.

The components illustrated in the figures represent components that may or may not be present in various embodiments of the present disclosure described herein, such that embodiments may include fewer or more components than those shown in the figures while not departing from the scope of the present disclosure.

The phrases "in an embodiment," "in some embodiments," "according to one embodiment," and the like generally mean that the particular feature, structure, or characteristic following the phrase may be included in at least one embodiment of the present disclosure or may be included in more than one embodiment of the present disclosure (importantly, such phrases do not necessarily refer to the same embodiment).

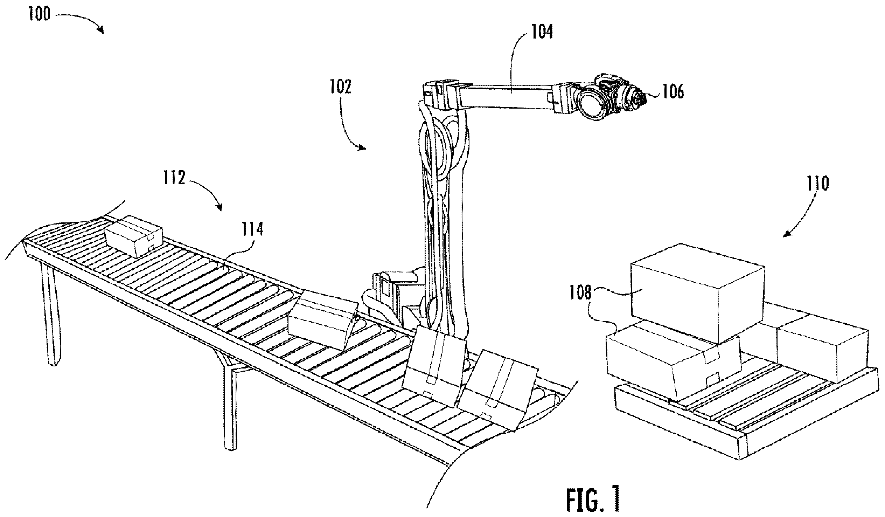

FIG. 1 illustrates an environment 100 implementing a robotic system 102 performing palletization and/or depalletization. The robotic system 102 (hereinafter referred to as "the robot 102") includes a robotic arm 104 having an end effector 106 configured to move a plurality of articles 108 from a first location 110 to a second location 112. In an example, the first location 110 may be a place where the articles 108 are stacked and the second location 112 may be a conveyer 114. A process of moving the articles 108 from the first location 110 (stacked location) to the second location 112 (conveyer 114) may be referred to as the depalletization. In some embodiments, the robot 102 may include a mobile base that allows a body of the robot 102 to translate in any direction within a horizontal plane as well as rotate about a vertical axis perpendicular to the horizontal plane. The end effector 106 is located at a distal end of the robotic arm 104 and a proximal end of the robotic arm 104, that is opposite to the distal end, may be operably connected to, for example, the mobile base. In an embodiment, the robot 102 may include multiple sensors to sense objects in a surrounding thereof and kinematically constrain movement of the robotic arm 104 to avoid collision with such objects.

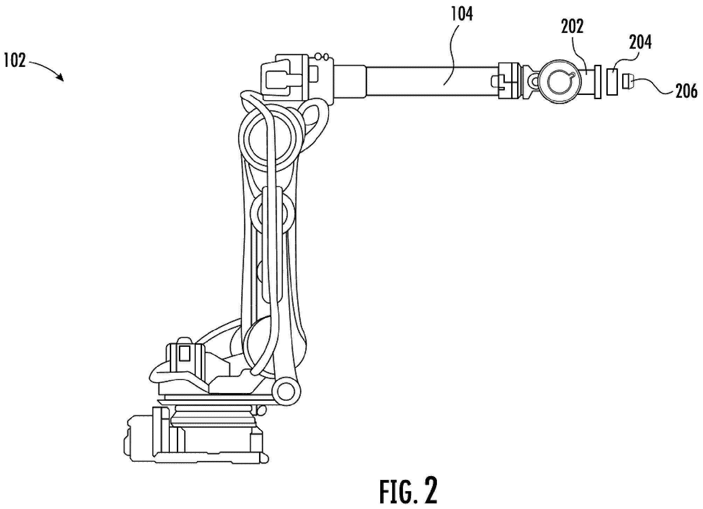

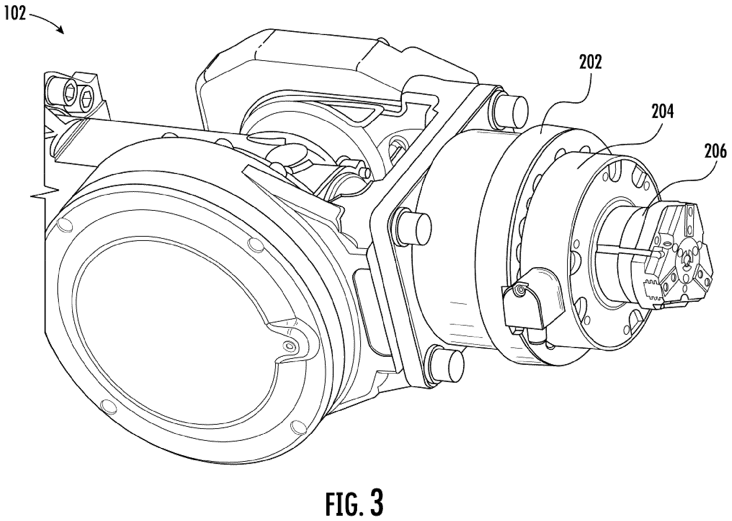

FIG. 2 illustrates a side view of the robot 102. Particularly, FIG. 2 illustrates an exploded view of a portion of the end effector 106. The robot 102 includes a robot flange 202, a first sensor 204 attached to the end effector 106, and an exemplary gripper 206. An exemplary arrangement of these components is illustrated in FIG. 3. In some embodiments, the end effectors 106 may be implemented as one of electric grippers, pneumatic grippers, suction cups, magnetic grippers, or mechanical grippers. These end effectors 106 may be used to pick and places the articles 108, machine tending, packaging, assembly tasks, quality testing and inspection, and surface finish detection. According to an aspect of the present disclosure, the first sensor 204 is a force sensor configured to generate a first input corresponding to a value of force required to lift the article from the first location 110. The first sensor 204 is attached to an engagement surface of the end effector 106. As used herein, the term "engagement surface" is a portion of the end effector 106 configured to abut at least one surface of the article 108. For example, in case of suction cups, the engagement surface refers to a periphery of the suction cups that contacts the article 108 to, for example, lift the article from the first location 110. In case of mechanical grippers (also sometimes understood as claspers which are finger-like projections to rigidly hold the article 108), the engagement surface refers to an inner surface of the gripper that contacts the article 108 for the purpose of lifting or moving. More specifically, the first sensor 204 is attached to the center of the engagement surface. Mounting the first sensor 204 to the center of the engagement surface or the center of the end effector 106 eliminates need for applying additional transformations on force and torque measurements. The first sensor 204, which is embodied as the force and/or torque sensor, matches a bolting pattern on the robot flange 202 and hence can be easily mounted without extra human effort. Further, the force and/or torque sensor is configured to readily receive the end effector 106 thereon, such that the force and/or torque sensor lies at the center of the end effector 106.

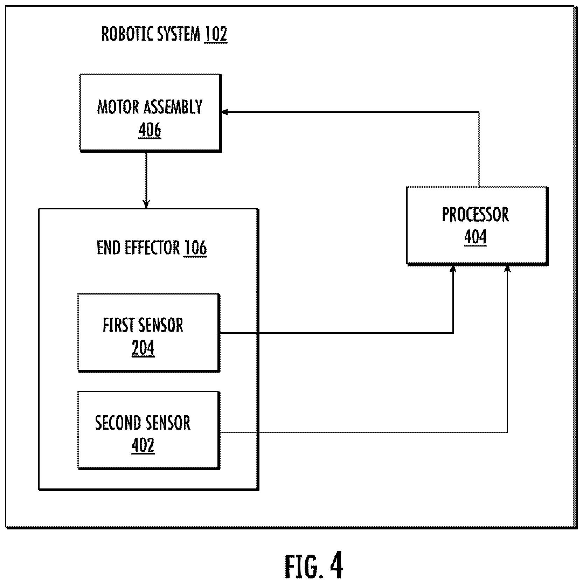

FIG. 4 is an exemplary block diagram representation of the robot 102, according to one aspect of the present disclosure. The robot 102 also includes a second sensor 402 attached to the end effector 106 and configured to generate a second input in response to movement of the end effector 106 engaged with the article 108. The second input corresponds to a value of acceleration of the end effector 106 engaged with the article 108 and moving from the first location 110. In some embodiments, the second input corresponds to a pose of the end effector, and velocity and acceleration of the end effector may be derived from the second input. As used herein, the term "pose" indicates position and orientation of the end effector 106.

The robot 102 also includes a processor 404 communicably coupled to each of the first sensor 204 and the second sensor 402. The processor 404 may be implemented as one or more processors that are configured to execute instructions stored in a memory (for example, random-access memory (RAM), read only memory (ROM), hard disk, optical disc, subscriber identity module (SIM) card, memory stick, secure digital (SD) memory card, on-processor cache, and the like). Alternatively, the processor may be implemented using dedicated circuitry, such as a programmed field-programmable gate array (FPGA), a graphical processing unit (GPU), or an application-specific integrated circuit (ASIC). In some embodiments, the processor 404 may include a memory (not shown) to store information.

The processor 404 is operably coupled to the robotic arm 104 and configured to align the end effector 106 with respect to one article from among the plurality of articles 108 at the first location 110. Upon aligning the end effector 106 with the article 108, the processor 404 is configured to actuate the end effector 106 to lift the article 108 from the first location 110. As used herein, the term "communicably coupled" refers to a connection established between the processor 404 and each of the first sensor 204 and the second sensor 402 to receive the first input and the second inputs, respectively. In other words, the processor 404 is configured to receive the first input and the second input from the first sensor 204 and the second sensor 402, respectively. The first input is received by the processor 404 in response to the end effector 106 lifting the article 108 from the first location 110 and the second input is received by the processor 404 in response movement of the end effector 106 engaged with the article 108 and moving from the first location 110. In an embodiment, the processor 404 may invoke each of the first sensor 204 and the second sensor 402 and fetch the first input and the second input therefrom, respectively.

Based at least on the first input, the processor 404 is configured to calculate a mass of the article 108 engaged with the end effector 106. In an embodiment, the processor 404 is configured to move the robotic arm 104 at a constant velocity, thereby achieving no acceleration on the article 108. As a result, a resultant force on the article 108 is equal to the weight of the article 108 (since 'mass' is a measure of inertia and 'weight' is a measure of force acting on the article 108, the term 'weight' has been used at instances where required force is discussed). Therefore, the first sensor 204 generates the first input corresponding to the value of force required to lift the article 108 from the first location 110, which, in this case, would be equal to the weight of the article 108. Thus, the processor 404 may be configured to determine the value of the first input, and thereby determine the mass of the article 108. According to an aspect of the present disclosure, the calculation of the mass of the article 108 is performed by the processor 404 during the movement of the robotic arm 104 from the first location 110. That is, the article 108 is not held at a stationary position for the purpose of calculating mass thereof, unlike the conventional methods employed in known robots which mandates the article to be held stationary for a time interval for calculating the mass thereof. As such, the robot 102 of the present disclosure may allow for reduction in overall time required for the depalletization and/or palletization process.

Further, based on the calculated mass of the article 108, the processor 404 is configured to control a speed and acceleration of movement of the robotic arm 104 towards the second location 112. In one aspect, a speed and acceleration of movement of the robotic arm 104 prior to calculating the mass of the article 108 may be lesser than a speed and acceleration of movement of the robotic arm 104 after calculating the mass of the article 108. In another aspect, the speed and acceleration of movement of the robotic arm 104 prior to calculating the mass of the article 108 may be greater than the speed and acceleration of movement of the robotic arm 104 after calculating the mass of the article 108. Accordingly, duration of movement of the robotic arm 104 also varies in the two segments. As used herein, the term "segment" refers to each of a time period before and after calculating the mass of the article 108. Such control on speed and acceleration of movement of the robotic arm 104 based on the calculated mass of the article 108 may help disposing the article 108 carefully at the second location 112, which otherwise was a challenge with the conventional methods employed in known robots. Owing to the control on speed and acceleration of movement of the robotic arm 104, a momentum of the robotic arm 104 may also be maintained, thus achieving smooth disposal of the article 108 on the conveyer 114 and thereby eliminating instances of dropping the article 108 on the conveyer 114.

In an embodiment, the processor 404 is configured to calculate the mass of the article 108 based at least on the first input and the second input. As mentioned earlier, the second input corresponds to the value of acceleration of the end effector 106 engaged with the article 108. As such, the processor 404 receives real-time input about the acceleration of the end effector 106 from the second sensor 402 and real-time input from the first sensor 204 about the force required to lift the article 108. Based at least on the values of the force and the acceleration, the processor 404 is configured to calculate the mass of the article 108 and control the speed of movement of the robotic arm 104 based on the calculated mass of the article 108. In some embodiments, other parameters, for example, but not limited to, torque values and moment of inertia of the end effector 106 may be considered by the processor 404 in addition to the first input and the second input. The processor 404 is operably coupled to a motor assembly 406 of the robot 102. The motor assembly 406 is configured to move the robotic arm 104 in multiple degrees of freedom. The processor 404 is configured to actuate the motor assembly 406 to control the speed of movement of the robotic arm 104. As used herein, the term "processor" should not be construed as a single component rather represents one or more processors configured to perform one or more functions. For example, in some embodiments, the processor 404 may be implemented as a master controller and the motor assembly 406 may be controlled by a slave controller (not shown) configured to receive inputs from the processor 404 to maneuver the robotic arm 104 based on the speed and acceleration determined by the processor 404. Similar, in some embodiments, multiple other processors, for example microcontrollers, may be employed in the robot 102 to perform and/or control various operations either independently or based on the inputs from the master controller (such as the processor 404).

In another embodiment, the processor 404 is configured to receive a first set of inputs from the first sensor 204, during a first time interval, in response to the end effector 106 lifting the article 108 from the first location 110. The term "first time interval" corresponds to a duration of the first segment as described earlier with respect to calculation of the mass of the article 108. In an example, the first time interval may be in a range of about 15 milliseconds to about 75 milliseconds. In an example, the first set of inputs may include samples of force data ranging from 15 samples to 100 samples. In an embodiment, each input of the first set of inputs is received at a predefined frequency. In an example, the predefined frequency may be in a range of about 0.5 kilohertz to about one kilohertz.

The processor 404 is further configured to filter the first set of inputs to obtain a filtered set of inputs free from noise. The first set of inputs, such as the multiple readings for force values, may often be subjected to noise and such data may deteriorate when the robotic arm 104 is in motion. As such, it is necessary to remove the noise from the obtained values to achieve accuracy. In an embodiment, a low pass filter may be used to remove high frequency noise in the obtained force values. Based at least on the filtered set of inputs, the processor 404 is configured to calculate the mass of the article 108 and control the speed and acceleration of movement of the robotic arm 104 towards the second location 112, based on the calculated mass of the article 108. In an embodiment, the processor 404 may consider acceleration of the end effector 106 to calculate the mass of the article 108. In that regard, the processor 404 may be configured to receive a second set of inputs from the second sensor 402 in response to movement of the end effector 106 engaged with the article 108, where the second sensor 402 is attached to the end effector 106.

The processor 404 may be configured to calculate, during the first time interval, a first value of acceleration of the end effector 106 engaged with the article 108 and moving from the first location 110. In an example, the first value of acceleration is calculated based on the second set of inputs from the second sensor 402. The second sensor 402 is attached to the end effector 106 and may be configured to generate the second set of inputs corresponding to the position of the end effector 106 during movement from the first location 110. As such, for example, the first value of acceleration (such as, an average value of acceleration) of the end effector 106 may be calculated. Further, based at least on the filtered set of inputs and the calculated first value of acceleration, the processor 404 may be configured to calculate the mass of the article 108. In an embodiment, the processor 404 is configured to calculate the mass for each article 108 picked from the first location. As such, based on size, dimension, and mass of the article 108, the speed and acceleration of movement of the end effector 106 towards the second location 112. For the purpose, the processor 404 determines a second value of acceleration based on the calculated mass of the article 108, such that the article 108 is disposed correctly at the second location 112, such as on the conveyer 114. The processor 404 then actuates the motor assembly 406 to cause movement of the end effector 106 at the second value of acceleration during a second time interval towards the second location 112. As used herein, the term "second time interval" refers to the second segment described earlier with respect to the calculation of mass of the article 108.

In embodiments where the second input corresponds to the pose of the end effector 106, multiple samples of data regarding the pose of the end effector 106 may be obtained during a predefined time period. Based on the received data, the processor 404 may be configured to determine the velocity of the end effector 106 from a derivative of the position and orientation of the end effector 106. Further, the processor 106 may be configured to determine value of acceleration of the end effector 106 from a derivative of the determined velocity.

For the purpose of brevity, few operations of the robot 102 are described with respect calculation of the mass of the article 108 and movement of the robotic arm 104 based on the calculated mass. In some embodiments, additional intermediate operations may be performed by the robot 102 or the operations described herein may be modified without departing from the scope of the present disclosure.

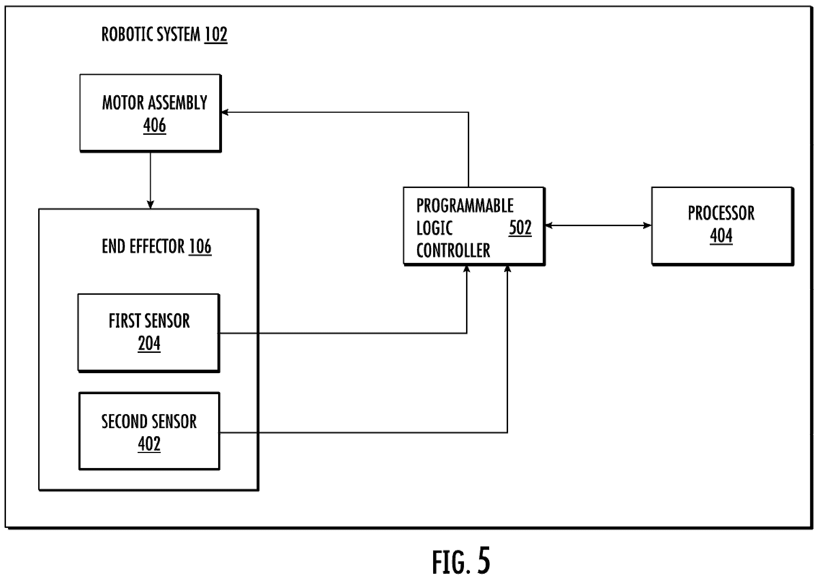

FIG. 5 is an exemplary block diagram representation of the robot 102, according to another aspect of the present disclosure. The robot 102 may include a programmable logic controller (PLC) 502 communicably coupled to the first sensor 204, the second sensor 402, and the processor 404, and operably coupled to the motor assembly 406. As such, the PLC 502 is configured to receive the first input and the second input from the first sensor 204 and the second sensor 402, respectively. The PLC 502 is configured to prepare the filtered set of inputs based on the first input and the second input and communicate the filtered set to the processor 404 for further processing. The processor 404 then calculates the mass of the article 108 based on the input from the PLC 502 and provides control inputs to the PLC 502 to actuate the motor assembly 406 to move the robotic arm 104 towards the second location 112 based on the calculated mass of the article 108. In an embodiment, the control inputs provided by the processor 404 to the PLC 502 includes values of speed and acceleration with which the end effector 106 should be moved towards the second location 112. As such, a difference between the embodiment described in FIG. 4 and FIG. 5 is the inclusion of the PLC 502 which functions as a point of receiving raw inputs from the sensor and control inputs from the processor 404. In an embodiment, a communication cycle time between the PLC 502 and the processor 404 may be in a range of about 50 milliseconds to about 70 milliseconds. More particularly, the communication cycle time may be about 67 milliseconds. As such, inclusion of the PLC 502 in the process does not delay the operation of the robot 102. In all of the embodiments described herein, about 1000 samples of data, over a short time period, of each for force values and acceleration values may be fetched by the processor 404 from the first sensor 204 and the second sensor 402, to accurately calculate the mass of the article 108 and control speed of movement of the robotic arm 104.

To this end, the present disclosure provides an efficient robot 102 which can carefully transport the articles 108 from the first location 110 to the second location 112 and ensure careful disposal of the article 108 at the second location 112. As such, problems related to dropping the articles 108 at the second location 112 may be avoided, thereby ensuring enhanced reliability on handling of the articles 108. More specifically, momentum of the article 108 carried by the end effector 106 may be regulated based on the calculated mass of the article 108, thereby achieving a steady disposal of the article 108 at the second location 112, for example on the conveyer 114. In addition, since the mass of the article 108 picked by the end effector 106 is calculated during movement of the robotic arm 104, time required for each transport cycle is not compromised. Also, the processor 404 may automatically adjust the speed and acceleration of the robotic arm 104 based on the mass of the article 108, that is lower speed and acceleration estimation for heavy articles and higher speed and acceleration estimation for lighter articles. As such, an overall time for depalletization may be reduced as compared to that of the conventional known methods employed in known robots. Owing to the automatic adjustment of the speed and acceleration of the robotic arm 104 and smooth disposal of the article 108 at the second location 112, damages to the articles 108 (such as drop or spillage of liquids, for example paints, from the packaging) may be avoided and human intervention required for damage control or clean-up may also be eliminated, thereby reducing the overall article handling cost.

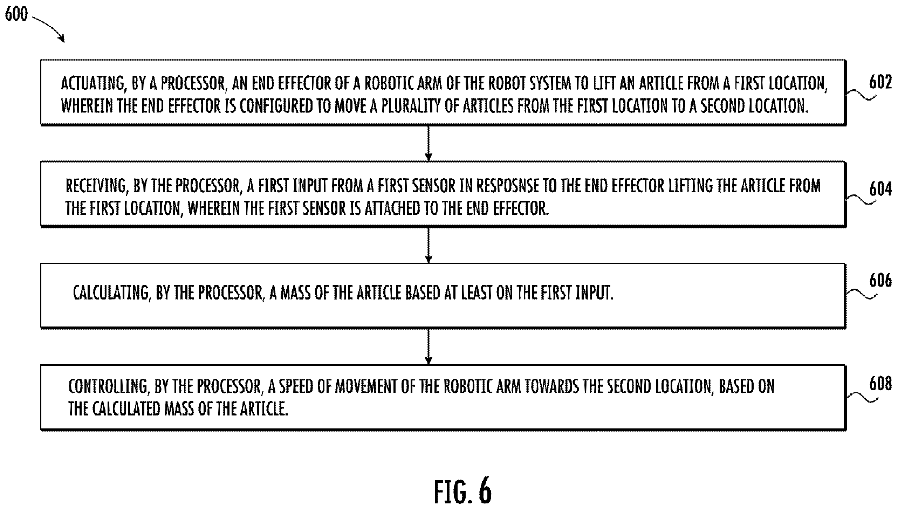

FIG. 6 is a flowchart of a method 600 of controlling the robot 102, according to one aspect of the present disclosure. The method 600 is described in conjunction with the FIG. 1 through FIG. 5. At step 602, the method 600 includes actuating, by the processor 404, the end effector 106 to lift the article 108 from the first location 110, where the end effector 106 is configured to move the plurality of articles 108 from the first location 110 to the second location 112 (for example the conveyer 114). As described herein, the step of actuating the end effector 106 to lift the article 108 includes aligning, by the processor 404, the end effector 106 with respect to the article 108.

At step 604, the method 600 includes receiving, by the processor 404, the first input from the first sensor 204 in response to the end effector 106 lifting the article 108 from the first location 110, where the first sensor 204 is attached to the end effector 106. In an embodiment, the first sensor 204 is attached to the engagement surface of the end effector 106. More particularly, the first sensor 204 is attached to the center of the engagement surface. Preferably, the first sensor 204 is a low intensity force sensor and, as such, the first input corresponds to a value of force required to lift the article 108 from the first location 110.

At step 606, the method 600 includes calculating, by the processor 404, the mass of the article 108 based at least on the first input from the first sensor 204. In some embodiments, the method 600 may include calculating the mass of the article 108 based on the force required to lift the article 108 and the acceleration of the end effector 106 engaged with the article 108.

At step 608, the method 600 includes controlling, by the processor 404, the speed of movement of the robotic arm 104 towards the second location 112, based on the calculated mass of the article 108.

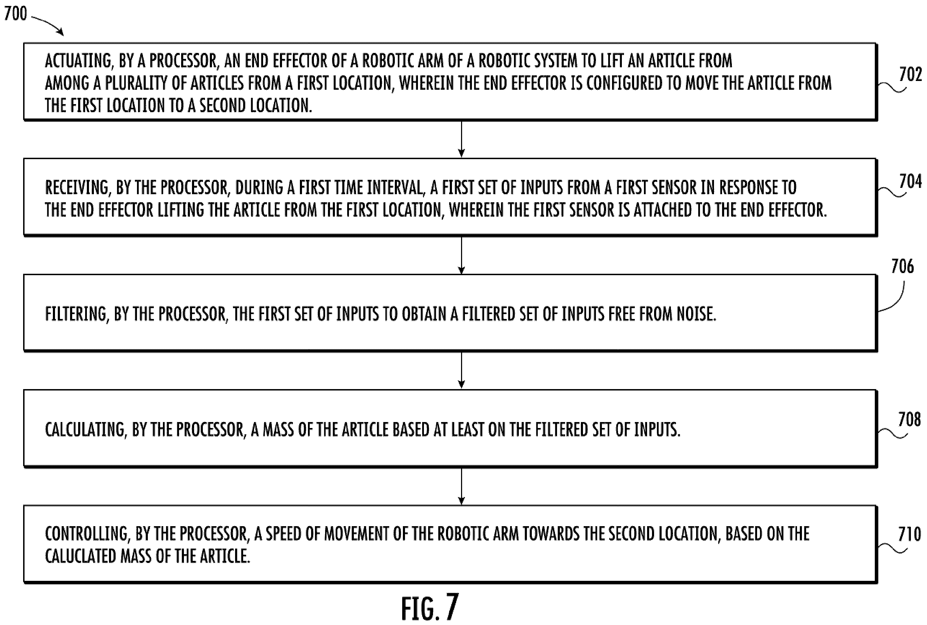

FIG. 7 is a flowchart of a method 700 of controlling the robot 102, according to another aspect of the present disclosure. The method 700 is described in conjunction with the FIG. 1 through FIG. 5. At step 702, the method 700 includes actuating, by the processor 404, the end effector 106 to lift the article 108 from the first location 110, where the end effector 106 is configured to move the plurality of articles 108 from the first location 110 to the second location 112 (for example the conveyer 114).

At step 704, the method 700 includes receiving, by the processor 404, during the first time interval, the first set of inputs from the first sensor 204 in response to the end effector 106 lifting the article 108 from the first location 110, where the first sensor 204 is attached to the end effector 106. In an embodiment, the first sensor 204 is attached to the engagement surface of the end effector 106. More particularly, the first sensor 204 is attached to the center of the engagement surface. Preferably, the first sensor 204 is a low intensity force sensor and, as such, the first input corresponds to a value of force required to lift the article 108 from the first location 110.

At step 706, the method 700 includes filtering, by the processor 404, the first set of inputs to obtain the filtered set of inputs free from noise.

At step 708, the method 700 includes calculating, by the processor 404, the mass of the article 108 based at least on the filtered set of inputs.

At step 710, the method 700 includes controlling, by the processor 404, the speed and acceleration of movement of the robotic arm 104 towards the second location 112, based on the calculated mass of the article 108.

The foregoing method descriptions and the process flow diagrams are provided merely as illustrative examples and are not intended to require or imply that the steps of the various embodiments must be performed in the order presented. As will be appreciated by one of skilled in the art, the order of steps in the foregoing embodiments may be performed in any order. Any reference to claim elements in the singular, for example, using the articles "a," "an" or "the" is not to be construed as limiting the element to the singular.

Many modifications and other embodiments of the inventions set forth herein will come to mind to one skilled in the art to which these inventions pertain having the benefit of teachings presented in the foregoing descriptions and the associated drawings. Although the figures only show certain components of the robot 102 described herein, it is understood that various other components may be present. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

## Claims

1. A robotic system comprising:
a robotic arm comprising an end effector configured to move a plurality of articles from a first location to a second location;
a first sensor attached to the end effector; and
a processor communicably coupled to the first sensor, the processor configured to:
actuate the end effector to lift an article from the first location;
receive a first input from the first sensor in response to the end effector lifting the article from the first location;
calculate a mass of the article based at least on the first input; and
control a speed and acceleration of movement of the robotic arm towards the second location, based on the calculated mass of the article.

2. The robotic system of claim 1, wherein the first sensor is a force sensor, and wherein the first input corresponds to a value of force required to lift the article from the first location.

3. The robotic system of claim 1, wherein the first sensor is attached to an engagement surface of the end effector, wherein the engagement surface is configured to abut at least one surface of the article.

4. The robotic system of claim 3, wherein the first sensor is attached to the center of the engagement surface.

5. The robotic system of claim 1, wherein the processor is operably coupled to the robotic arm and configured to align the end effector of the robotic arm with respect to the article.

6. The robotic system of claim 1 further comprising a second sensor attached to the end effector and configured to generate a second input in response to movement of the end effector engaged with the article, wherein the second input corresponds to a value of acceleration of the end effector engaged with the article and moving from the first location.

7. The robotic system of claim 6, wherein the processor is communicably attached to the second sensor and configured to calculate the mass of the article based at least on the first input and the second input.

8. A method of controlling a robotic system, the method comprising:
actuating, by a processor, an end effector of a robotic arm of the robotic system to lift an article from a first location, wherein the end effector is configured to move a plurality of articles from the first location to a second location;
receiving, by the processor, a first input from a first sensor in response to the end effector lifting the article from the first location, wherein the first sensor is attached to the end effector;
calculating, by the processor, a mass of the article based at least on the first input; and
controlling, by the processor, a speed and acceleration of movement of the robotic arm towards the second location, based on the calculated mass of the article.

9. The method of claim 8, wherein the first sensor is a force sensor, and wherein the first input corresponds to a value of force required to lift the article from the first location.

10. The method of claim 8 further comprising aligning, by the processor, the end effector of the robotic arm with respect to the article.

11. The method of claim 8 further comprising:
receiving, by the processor, a second input from a second sensor in response to movement of the end effector engaged with the article, wherein the second input corresponds to a value of acceleration of the end effector engaged with the article and moving from the first location; and
calculating the mass of the article based at least on the first input and the second input.

12. A method of controlling a robotic system, the method comprising:
actuating, by a processor, an end effector of a robotic arm of the robotic system to lift an article from among a plurality of articles from a first location, wherein the end effector is configured to move the article from the first location to a second location;
receiving, by the processor, during a first time interval, a first set of inputs from a first sensor in response to the end effector lifting the article from the first location, wherein the first sensor is attached to the end effector;
filtering, by the processor, the first set of inputs to obtain a filtered set of inputs free from noise;
calculating, by the processor, a mass of the article based at least on the filtered set of inputs; and
controlling, by the processor, a speed and acceleration of movement of the robotic arm towards the second location, based on the calculated mass of the article.

13. The method of claim 12, wherein the controlling of speed and acceleration of movement of the robotic arm towards the second location comprises:
calculating, by the processor, during the first time interval, a first value of acceleration of the end effector engaged with the article and moving from the first location; and
calculating, by the processor, the mass of the article based at least on the filtered set of inputs and the calculated first value of acceleration.
moving, by the processor, the end effector of the robotic arm at a second value of acceleration during a second time interval towards the second location, wherein movement of the end effector is continuous from the first location to the second location, and wherein the second value of acceleration is less than the first value of acceleration.

14. The method of claim 13, wherein calculating the first value of acceleration of the end effector comprises:
receiving, by the processor, a second set of inputs from a second sensor in response to movement of the end effector engaged with the article from the first location, wherein the second sensor is attached to the end effector.

15. The method of claim 12, wherein each input of the first set of inputs is received at a predefined frequency.
